# NEW EUROPEAN PATENT SPECIFICATION

(11) **EP 2 679 813 B2**
(45) Date of publication and mention of the opposition decision: **20.11.2019**
(45) Mention of the grant of the patent: 18.01.2017
(21) Application number: 12174109.4
(22) Date of filing: 28.06.2012
(51) Int. Cl.: F03D 7/04

(54) **Method and arrangement for optimizing a parameter setting of a wind turbine**
Verfahren und Anordnung zur Optimierung einer Parametereinstellung einer Windturbine
Système et procédés pour améliorer la performance d'un système d'échantillonnage à base de semi-conducteur

(43) Date of publication of application: 01.01.2014
(73) Proprietor: Siemens Gamesa Renewable Energy A/S, 7330 Brande (DK)
(72) Inventor: Esbensen, Thomas, 7400 Herning (DK); Danielsen, Kim Billesoe, 7430 Ikast (DK)
(74) Representative: Aspacher, Karl-Georg

(56) References cited:
- US-A1- 2007 299 548
- US-A1- 2012 025 530

## Description

### Field of invention

The present invention relates to a method and to an arrangement for optimizing a parameter setting of a wind turbine, in order to optimize a target function, in particular to maximize power output and/or to minimize a mechanical and/or electrical and/or electronic load experienced by the wind turbine, when operated according to the optimized parameter setting.

### Art Background

US 7,603,202 B2 discloses a method for optimizing the operation of wind farms, wherein the target installation is first operated using a first set of operating parameters and then using a second set of operating parameters different from the first operating parameters and a target variable for the target wind energy installation and reference results of a reference wind energy installation are recorded, wherein an automated evaluation of the target variables by calculation of a quality measure taking account of the reference results is performed and wherein based on the automated evaluation which of the sets of operating parameters has better quality measure is determined in automated manner.

Thereby, the method relies on the availability of reference results of a reference turbine and a quality measure has to be computed.

It has been observed that the method disclosed in this document relies on a reference wind turbine installation which is not always available.

US 2007299548 discloses a method for optimizing the operation of wind energy installations including operating target and reference wind energy installations to optimize the target installation first using a first set of operating parameters and then using a second set of operating parameters different from the first operating parameters, recording target variables for the target wind energy installation and recording reference results of the reference wind energy installation in each case for both sets of operating parameters, performing an automated evaluation of the target variables by calculation of a quality measure taking account of the reference results, and determining in an automated manner based on the automated evaluation which of the sets of operating parameters has better quality measure.

US 2012025530 discloses a method for controlling the amplitude modulation of the noise generated by wind turbines including determining a rotor position of a first wind turbine, determining a rotor position of a second wind turbine, determining if the first and second wind turbines are operating in-phase and, in the event that the first and second wind turbines are operating in-phase, adjusting an operating condition of at least one of the first wind turbine and the second wind turbine so that the first and second wind turbines operate out-of-phase.

It is an object of the present invention to provide a method and arrangement for optimizing a parameter setting of a wind turbine, which may be performed by any wind farm or wind park. Further, there may be a need for a method and an arrangement for optimizing a parameter setting of a wind turbine, wherein the parameter setting or the optimized parameter setting obtained by the method is improved compared to a conventional method.

### Summary of the Invention

According to an embodiment of the present invention it is provided a method for optimization a parameter setting according to claim 1, the method comprising: operating a first wind turbine according to a first parameter setting, in particular during a first time period, simultaneously operating a second wind turbine according to a second parameter setting different from the first parameter setting, evaluating an operation of the first wind turbine by determining a first result of a target function, evaluating an operation of the second wind turbine by determining a second result of the target function, comparing the first result and the second result, and adapting the parameter setting based on the comparison, such as to optimize the target function, in particular without using any reference results, wherein the operating the first wind turbine according to the first parameter setting and the evaluating is done repeatedly to obtain plural first results; wherein the simultaneously operating the second wind turbine according to the second parameter setting and the evaluating is done repeatedly, to obtain plural second results, wherein a cumulated first result is obtained by combining the plural first results, wherein a cumulated second result is obtained by combining the plural second results, wherein adapting the parameter setting is based on a comparison of the cumulated first result and the cumulated second result.

The method aims to determine an adapted parameter setting such that the target function is optimized, i.e. assumes an extremum, such as a maximum or a minimum. The target function may for example be aimed to be maximized, if the target function represents or is indicative of an accumulated power output or energy output (accumulated over the plural results) of the wind turbine when operated according to the optimized parameter setting. If the target function comprises (only) a mechanical and/or electrical load of the wind turbine operated according to the adapted parameter setting, the adapted parameter setting may be such as to minimize the target function. Further, if the target function depends on or is indicative of both the power output by the wind turbine and the load experienced by the wind turbine, it may for example depend on the power output P minus a factor times the load L, such that the target function TF may be a function like TF = P - α · L, if a positive load is indicated by L and if α denotes a constant factor which is positive. Also in this case optimizing the target function by appropriately adjusting or adapting the parameter setting may require to maximize the target function.

Further, the target function may comprise a component indicative of a noise emission of the respective wind turbine.

The first wind turbine as well as the second wind turbine may each comprise a wind turbine tower, a nacelle mounted on top of the tower, a rotor being supported within the nacelle, wherein the rotor has at one end one or more rotor blades connected and wherein the rotor drives an electrical generator which may provide a variable frequency output power stream when the rotor is rotating due to impact of wind onto the plural rotor blades. The generator may be connected, in particular electrically connected at its output terminal, to a converter, such as an AC-DC-AC converter, wherein this converter may comprise a number of controllable switches such as e.g. isolated gate bipolar transistors (IGBTs).

The rotor blade may be adjusted regarding a blade pitch angle which defined an angle between a rotor plane and a cord line of the respective rotor blade. Adjusting the blade pitch angle may change a driving force of impacting wind.

The converter may be controlled by controlling respective gates of the plural controllable switches, such as by pulse width modulation signals, in order to adjust a desired torque the generator exerts on the rotor. Further, the converters may be controlled to output a particular desired power output (active power output and reactive power output), output voltage and/or output current. Further, the converter may be controlled in order to output a power stream having a particular fixed frequency. The output terminals of the converter or the converter may be connected or connectable, in particular via one or more transformers, to a utility grid which provides electric energy to a plurality of consumers.

The first wind turbine may in fact comprise a set or a plurality of first wind turbine and the second wind turbine may comprise in fact a set of a plurality of second wind turbines. All wind turbines of the first set of wind turbines may be operated analogously to the first wind turbine and all wind turbines of the second set of wind turbines may be operated analogously to the second wind turbine. Thereby in particular the wind turbine of the first set of wind turbines may be all the same and also the wind turbines of the second set of wind turbines may be of the same, in particular same type, model, having a essentially same electrical and mechanical specification. Further, the first wind turbine and the second wind turbine may have essentially the same specification or constitution or construction.

The first parameter setting may define first parameter values of a set of operational parameters and the second parameter setting may define second values of the same set of operational parameters.

A parameter setting may be defined to specify values (one value for each operational parameter) of one or more operational parameters. In particular, the first parameter setting may specify that the operational parameters have first values, while the second parameter setting may specify that the operational parameters have second values. Evaluating the operation may comprise measuring or determining in another manner a power output of the respective wind turbine and/or measuring or determining in another manner a load experienced by the respective turbine and measuring or determining in another manner noise emissions of the respective wind turbine. Thereby, respective measurement values may be detected and stored for further processing. In particular, measuring values obtained when operating the first wind turbine and/or the second wind turbine according to different parameter settings may be acquired and stored.

The first result may be a result of the target function when the respective wind turbine is operated according to the first parameter setting. Comparing the first result and the second result may comprise determining which result is greater or better or superior, in particular regarding energy output. Thereby, an arithmetic logical unit or processor may be employed.

Adapting the parameter setting may involve changing at least one operational parameter of the parameter setting. In particular, a plurality of parameter settings may be explored and respective results may be acquired and stored and based on the plurality of results that parameter setting may be selected which optimizes the target function.

The parameter setting may reflect parameters of the wind turbine controller which are optimized according to an embodiment of the present invention. Thereby, the influence of the controller setting may have a high impact on the power production, load, and/or acoustic noise emissions. Thereby, it may be possible to improve the annual energy production by one to two percent by proper optimization of the parameter settings, wherein further structural load may be reduced significantly and noise may also be reduced.

According to an embodiment of the present invention, the parameter setting is optimized recursively, iteratively or in another explorative manner. The target function makes it possible to compare the different parameter settings. According to an embodiment of the present invention wind fluctuations the wind turbines are subjected to do not have a high influence on the optimization task. In a conventional method the highly stochastic nature of the wind speed and wind direction may have made it difficult to use a straight forward optimization method, since wind fluctuations may have made it difficult to compare parameter settings derived in successive measurements.

Therefore, the first wind turbine is operated according to the first parameter setting and simultaneously the second wind turbine is operated according to the second parameter setting. Thus, the first wind turbine and the second wind turbine are expected to be subjected to essentially same external conditions, such as wind conditions, in particular regarding wind speed and/or wind direction. Thereby, the results may be compared in a reliable manner.

Further, the method does not require any reference value such as loads obtained by a reference wind turbine. According to an embodiment of the present invention a controller setting is optimized, wherein the setting (in the following the term controller setting is used as a synonym to parameter setting) may be software functions, controller parameter or a set of operational parameters for a number of turbines, such as the first set of wind turbines and/or the second set of wind turbines. In particular, the first wind turbine and the second wind turbine may belong to a same wind farm. In particular, the embodiment applies to a group of turbines, preferably consisting of an even number of turbine in one or more wind farm. Thereby, the first set of wind turbines is operated according to the first parameter settings and a first result of the target function is recorded. Thereby, the target function which can preferably be power production and/or load and/or noise emission may make it possible to compare the settings in terms of performance.

Thereby, according to an embodiment of the present invention the first wind turbine and the second wind turbine are arranged closely to each other such that they are effected in a similar manner by stochastic changes, such as fluctuation in the wind speed and/or wind direction and changing environmental conditions, such as temperature, humidity, etc. Power changes caused by these changing external conditions may therefore relate almost in the same way to the first wind turbine and to the second wind turbine. Thereby, the impact of stochastic changes may be induced.

According to an embodiment of the present invention the operating the first wind turbine according to the first parameter setting and the evaluating is done repeatedly to obtain plural first results, wherein the simultaneously operating the second wind turbine according to the second parameter setting and the evaluating is done repeatedly, to obtain plural second results, wherein a cumulated first result is obtained by summing the plural first results, wherein a cumulated second result is obtained by summing the plural second results, wherein adapting the parameter setting is based at least on a comparison of the cumulated first result and the cumulated second result, wherein in particular an operation of the first wind turbine or the second wind turbine is filtered out from the evaluation, if at least one criterion is satisfied or not satisfied, e.g. if the operation is above a rated wind speed and/or there is a wake situation between wind turbines.

By obtaining a cumulated first result and obtaining a cumulated second result the influence of errors may decrease. Further, the filtering may disregard external conditions or operation stats which are associated to situations not supported (such as for extremely high wind, extremely high rotational speed etc.), in order not to deteriorate the measurement results and thus not to deteriorate the cumulated first result and/or cumulated second result. For example, data may only be accepted, if the wind turbines are operated below the rated (or nominal) wind speed and only then e.g. if the turbines are not in wake to each other (one wind turbine is in a wind shadow zone and another wind turbine is not in a wind shadow zone).

According to an embodiment of the present invention the method further comprises repeating operating the first wind turbine and the second wind turbine for the particular parameter setting, until the cumulated first result differs by more than a threshold from the cumulated second result or until a number of time periods exceed a number limit.

Repeating the operating the first wind turbine and the second wind turbine for the respective parameter settings may allow to obtain a statistically more significant first result and second result. Thereby, averaged measurements may become more reliable. Thereby, the optimized parameter setting may be obtained in a more reliable and accurate manner.

According to the present invention the method further comprises operating the first wind turbine according to the second parameter setting during a second time period after the first time period, simultaneously operating the second wind turbine according to the first parameter setting, wherein adapting the parameter setting is further based on evaluating an operation of the first wind turbine operated according to the second parameter setting and evaluating an operation of the second wind turbine operated according to the first parameter setting. Thereby, the parameter settings for operating the respective wind turbines are swapped so that particular or potential differences between the first wind turbine and the second wind turbine in particular caused by their location or regarding their efficiency and measurement system are not impacting results with systematic errors.

Also these operations may be repeated several times. Further, also cumulative results may be obtained.

Thus, parameter settings are swapped between the first and the second turbine(s), such that the first turbine is operated according to the first parameter setting and the second turbine is operated according to the second parameter setting and afterwards vice versa. Then the two parameter settings can be compared without influence from inter-turbine deviations, tolerances, etc.

According to an embodiment of the present invention the method further comprises operating the first wind turbine according to at least one other first parameter setting, simultaneously operating the second wind turbine according to at least one other second parameter setting, wherein adapting the parameter setting is further based on evaluating an operation of the first wind turbine operated according to the at least one other first parameter setting and evaluating an operation of the second wind turbine operated according to the at least one other second parameter setting.

The number of first parameter settings being explored may depend on the number of operational parameter comprised in the parameter setting. Thereby, all possible parameter settings starting from a starting parameter setting may be explored and the respective target function may be evaluated. Thereby, the optimization of the parameter settings may be improved. In particular, several operational parameters comprised in the parameters setting can be optimized simultaneously.

According to an embodiment of the present invention the method further comprises operating the first wind turbine according to the at least one other second parameter setting; simultaneously operating the second wind turbine according to the at least one other first parameter setting, wherein adapting the parameter setting is further based on evaluating an operation of the first wind turbine operated according to the at least one other second parameter set and evaluating an operation of the second wind turbine operated according to the at least one other first parameter set.

Thereby, also the other parameter settings are swapped between the first wind turbine and the second wind turbine so that also measurement values for this swapped constellation are recorded and taken into account in order to optimize the parameter settings.

Thereby, differences regarding the operation and/or efficiency and/or load acceptance and/or noise emission between the first wind turbine and the second wind turbine may be taken into account and may not influence the final result of the optimized parameter setting.

According to an embodiment of the present invention the parameters setting includes settings for a plurality of operational parameters of the respective wind turbine, wherein in particular the first parameter setting differs in at least one setting of at least one of the plurality of operational parameters from the second parameter setting, wherein in particular the first parameter setting differs in all settings of all of the plurality of operational parameters from the second parameter setting.

Each of the operational parameters may influence a particular aspect of the operation of the wind turbine. The operational parameters may include mechanical and/or electric parameters. The first parameter setting may differ in one, two, three, four, five or more values of the operational parameter from the second parameter setting.

According to an embodiment of the present invention, the second parameter setting, the at least one other first parameter setting and the at least one other second parameter setting comprise all combinations of settings for the plurality of operational parameters that deviate by a respective parameter step in a positive and negative manner from a starting parameter setting, wherein in particular the first wind turbine is successively operated in 2^{N} different parameter settings, if N is the number of operational parameters of the plurality of operational parameters.

The starting parameter may for example be symbolized by s and s may represent a vector such as (s1, s2, ..., sn) of individual operational parameters s1, s2, s3, ..., sn. Each of the individual operational parameters may assume a value deviating by a respective parameter step or deviation in a positive manner, which may be denoted si+ for the operational parameter indexed by i, from a starting parameter value. A negative deviation of this parameter from a starting parameter value may be denoted as is a si-.

During the method all combinations of parameter settings may be explored (such as by operating the first wind turbine according to all combinations of parameter settings and/or by operating the second wind turbine according to all combinations of possible parameter settings), to effectively optimize multiple operational parameters simultaneously and still be able to distinguish the impact at the target function from individual operational parameters.

According to an embodiment of the present invention the parameter step or parameter deviation (from a starting parameter value) depends on a type of the operational parameter. If the operational parameter is for example the blade pitch angle, the parameter deviation may be between 0.1° and 1°. If the operational parameter is a rotational speed versus power output or torque characteristic, the parameter step may be for example defined to be a particular percentage, such as between 0.1% to 10%, around the characteristic, which will be represented by a curve showing a relationship between the rotational speed (on an abscissa or ordinate) and the power output or torque (on the ordinate or abscissa). Some or all parameter steps of some of the operational parameters may be expressed as a percentage of a current or a nominal value and other parameter steps of other operational parameters may be expressed in absolute terms.

The parameter step or deviation may change in particular, when the method is performed in a recursive manner. Thereby, the parameter step may in particular stepwise or continuously decrease.

Thereby, a convergence of the optimized parameter setting may be achieved.

According to an embodiment of the present invention the method further comprises operating, in a successive manner, both the first wind turbine and the second wind turbine according to a same parameter setting comprised in the first parameter setting, the second parameter setting, the at least one other first parameter setting and the at least one other second parameter setting, wherein adapting the parameter setting is further based on evaluating an operation of the first wind turbine and the second wind turbine operated according to the same parameter setting.

By operating both the first wind turbine and also the second wind turbine according to the same parameter setting variations between the first wind turbine and the second wind turbine will not impact results. Thereby, the optimization procedure may be improved.

According to an embodiment of the present invention the method is performed without using any reference result obtained by operating a reference turbine according to a reference parameter setting, as was necessary according to a conventional method. Further, after adapting the parameter setting based on the comparison, the method is performed in a recursive manner starting with the adapted parameter setting. The adapted parameter setting may thus be further optimized, since in the next cycle further parameter settings may be explored which may result in a still improved or optimized target function. Thereby, it may be ensured that the true optimized parameter setting may be found.

According to an embodiment of the present invention the first wind turbine and the second wind turbine are arranged such as to be subjected to essentially the same external conditions, in particular wind conditions, in particular regarding wind speed and/or wind direction.

Thereby, in particular the different parameter settings may be evaluated for the same experimental or external conditions.

According to an embodiment of the present invention the parameter setting includes a setting for a blade pitch angle characteristic of a rotor blade of the respective wind turbine, and/or a characteristics of a rotational speed of the rotor or generator versus output power of the generator or torque of the generator of the respective wind turbine, and/or an offset of wind direction sensor of the respective wind turbine, wherein in particular the target function comprises a power output of the respective wind turbine and/or a load experienced by the respective wind turbine during operation.

The blade pitch angle characteristic may not necessarily be a single pitch angle but may define a curve of blade pitch angles for different rotational speeds, different power or torque values, and/or different wind speeds (analogous to the speed-power characteristic).

In particular, the cumulated electrical power of the wind turbine is preferably used as the target function or target variable to be optimized. The blade pitch angle of the rotor blades for below rated wind speed, the rotational speed-power or rotational speed-torque characteristic of the generator and/or the offset of a wind direction sensor are preferably used for the parameter settings to be optimized. Thereby, the blade pitch angle is the angle of the individual rotor blade of the respective wind turbine with respect to the rotor blade and this angle may be optimized up to a few degrees. The optimum rotational speed of the rotor is determined by means of the rotational speed-power or rotational speed-torque characteristic in the variable speed control region, in which the rotor has a variable rotational speed. The wind direction sensor offset (or yaw offset) is a value for the sensor indicating an offset from its nominal direction and may amount to several degrees. This offset will be a result of a calibration accuracy and/or swirl of the rotor affecting the measured wind direction.

It should be understood that features individually or in any combination disclosed, described, explained or employed or a method for optimizing a parameter setting may be individually or in any combination also applied to an arrangement for optimize a parameter setting of a wind turbine according to an embodiment of the present invention and vice versa. According to the present invention it is provided an arrangement for optimization a parameter setting having the features of claim 13, the arrangement comprising an output section for providing a first operating signal causing a first wind turbine to operate according to a first parameter setting, in particular during a first time period and for simultaneously providing a second operating signal causing a second wind turbine to operate according to a second parameter setting different from the first parameter setting; an evaluator adapted to evaluate an operation of the first wind turbine by determining a first result of a target function, to evaluate an operation of the second wind turbine by determining a second result of the target function; a comparator adapted to compare the first result and the second result; and a processor adapted to adapt the parameter setting based on the comparison, such as to optimize the target function, in particular without using any reference results.

The present invention is now described with reference to the accompanying drawings. The invention is not limited to the illustrated or described embodiments.

### Brief Description of the Drawings

Fig. 1 illustrates a block diagram according to a method for optimization of a parameter setting according to an embodiment of the present invention; and
Fig. 2 illustrates an arrangement for optimizing a parameter setting of a wind turbine according to an embodiment of the present invention.

### Detailed Description

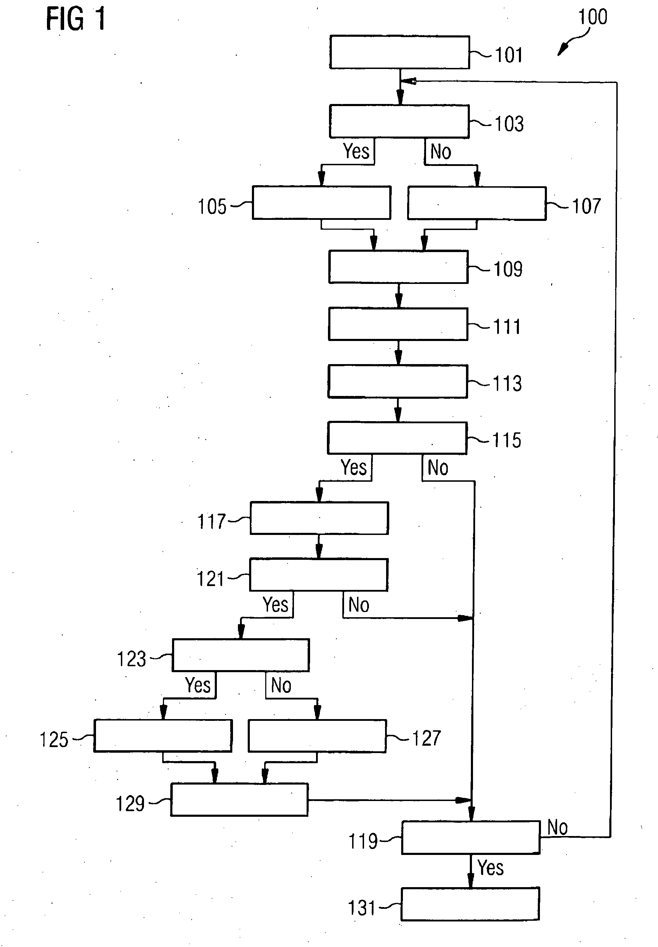

**Fig. 1** illustrates in flow diagram of a method 100 according to an embodiment of the present invention. The parameter setting to be optimized is denoted s, which may in particular represent a vector s = (s1, s2, s3, ..., sn) of individual operational parameters si, wherein i runs from 1 to n. s may for example represent the blade pitch angle for some operational conditions, the rotational speed-power output characteristic, and/or the offset of the wind direction sensor. In particular the blade pitch angle may be optimized for below rated wind speed, i.e. in the variable-speed and constant-speed region, not in the constant-power region (at high wind speeds).

The method 100 illustrated in Fig. 1 starts in a starting block 101, wherein the optimization is started with an initial setting s and wherein the variables cumT+ and cumT- in the accumulated results of the target function are initialized. In a decision block 103 it is asked whether this block is entered for an odd time. If this is the case, the method 100 switches to the block 105, wherein the first wind turbine is updated such as to achieve the parameter setting denoted as s+ = s+Δ and where the second wind turbine is updated to achieve the parameter setting s- = s-Δ.

If the block 103 is entered for a uneven time it is branched into a block 107, in which the first wind turbine is updated to achieve the parameter setting is s- = s-Δ and where the second wind turbine is updated to achieve the parameter setting s+ = s+Δ.

Afterwards it is entered a block 109 which denotes a waiting block for the transition of the parameter setting to settle. After settlement of the new updated parameter setting the block 111 is entered, wherein both wind turbines are operated according to their respective parameter settings.

Thereafter the block 113 is entered in which the target function is evaluated for the first parameter setting, i.e. s+ and the second parameter setting, i.e. s-, in order to derive the first target result T+ associated with the first parameter setting s+ and in order to derive the second target result T- which is associated with the second parameter setting s-.

Further, in block 115 filter conditions are evaluated to filter out inappropriate/unsupported conditioned operations. In block 115 filter conditions are accepted in the two recent time periods without generative targets have been updated in the two recent periods, wherein the question is asked, whether the filter conditions accepted in the two recent periods without cumulative targets have been updated in the two recent periods. If this is the case, it is branched to the block 117 and if this is not the case it is branched into the block 119.

In the block 117 the cumulated targets cumT+ and cumT- are updated using the first result T+ and the second result T-, respectively.

Thereafter, it is entered the block 121 wherein it is asked whether a sufficient significance between cumT+ and cumT- is determined or whether a decision threshold is exceeded or reached. If this is the case, it is branched to block 123, wherein it is determined whether cumT+ is larger or smaller than cumT-, in order to evaluate whether the first parameter setting s+ or the second parameter setting s- is superior. If the first parameter setting s+ is superior, then it is branched into the block 125 wherein s is updated towards s+, whereas in the other case it is entered the block 127, in which s is updated towards s-.

Afterwards the cumulated targets cumT+ and cumT- are reset in a block 129.

In block 119 it is asked whether the optimization is complete. If this is the case, the method ends in block 131. If the optimization is not complete, it is branched again into the entry block 103, wherein the method is repeated in a recursive manner.

In particular, new parameter settings of the two wind turbines are swapped. Always one part of the first wind turbine is using a first parameter setting (s+), while the other part in particular the second wind turbine is using a second parameter setting (s-). For the next time period the said parameter setting is swapped between the groups of different turbines.

In particular, the two settings or parameter settings s+ and s- are based on the setting s that is initially a starting guess. The aim of the procedure is to find out, if s can be improved. Therefore, one setting, i.e. the first parameter setting s+ is set higher than s, while the second parameter setting s- is set lower than s. This may be used to determine, if s is too high or too low. If s+ and s- are equally good (i.e. the first parameter setting and the second parameter setting result in a same result of the target function), one can assume that s is optimal. Herein, the deviation is denoted as Δ, i.e. s+ = s+Δ and s- = s-Δ.

A transition period is introduced in the block 109, to introduce a delay after setting the corresponding parameter setting until the evaluation is initiated. This may allow the dynamic of the systems to settle, in order to see the effect of the current setting in the target variable or target function rather than the previous setting or the transition between the two settings.

The target variable or target function is evaluated for the first parameter setting and the second parameter setting, i.e. s+ and s-. This is performed in the block 113. Thereby, the target function may be preferably the aggregate power output of the wind turbine. Then in particular, if the first set of wind turbines comprises more than only the first wind turbine, T+ could be the sum of the power production portions of the individual wind turbine comprised in the first set of wind turbines, which have been operated according to the first parameter setting s+. Analogously, T- would be the sum of power production of the wind turbines of the second set of wind turbines which have been operated according to the second parameter setting s-.

The filtering performed in method step 115 is optional. Filter conditions refer to conditions which should be fulfilled in order for a certain operation period to be accepted. If a filter condition is not fulfilled, the data in this period may be rejected and not be included in the optimization.

Thereby, examples of the filter conditions may be
1) Data can only be accepted, if the turbines are operating in the power optimization control region (below the rated wind speed). Otherwise, it will not make sense to optimize the power production, since the output power may be emitted anyway.
2) The turbines should not be in wake of each other.
3) All turbines should be in operation.

The first result T+ refers to the result of the evaluation of the target function in one time period operated according to the first parameter setting s+ and the second result T-refers to the result of evaluating the target function when the wind turbines are operated according to the second parameter setting s-. The cumulated target results are denoted cumT+ and cumT-, wherein cumT+ is the total power production using the setting s+ and cumT- is the total power production using s-.

If there is sufficient significance determined between cumT+ and cumT-, as will be determined in the block 121, or if the number of accepted time periods is above or reached any threshold limit, a new decision can be made, i.e. a new step may be made to convert s to a more optimal value. If cumT+ is greater than cumT-, which means that the setting s+ is superior to s-, when s is updated towards (in the direction of) s+, otherwise s- is superior to s+ and s is updated towards (in the direction of) s-.

The completion of the optimization may occur in block 119 if for example:
1) The progress of s has stopped or if the result for the different target settings does not change much. This could in principle or in particular be realized, if s is compared to its value some decisions ago not changing much and is essentially being constant.
2) The number of decisions or iterations has reach or exhibit a threshold.

It should be noted, that the decision threshold (e.g. the number of iterations) the deviation Δ, and/or the step size (used to update s for a new decision) may be functions of operational parameter, e.g. change based on progress, number of performed decisions, etc.

It should be noted that the block diagram of the figure, i.e. block diagram 100 shows only the case, wherein one parameter setting comprising a single operational parameter is to be optimized. However, the scheme 100 illustrated in the figure may easily be extended to also comply with a parameter setting comprising a plurality of operational parameters, in which case s may indicate a vector or operational parameters.

In case the parameter setting comprises a single operational parameter the wind turbines may be operated as in Table 1:

**Table 1:**

| Time period | t1 | t2 |
|---|---|---|
| First wind turbine | s+ | s- |
| Second wind turbine | s- | s+ |

Thereby, in the first time period t1 the first turbine is operated according to the parameter setting s+ and the second turbine is operated according to the parameter setting s-. During the second time interval t2 the parameter settings are swapped such that the first wind turbine is operated according to the parameter setting s-, while the second wind turbine is operated according to the parameter set s+. After the second time period t2 the sequence of setting repeats in not illustrated periods t3 and t4 in the same manner.

If the parameter setting comprises two independent operational parameters, such as a parameter s1 and a second parameter s2, the wind turbines may be operated according to the following Table 2:

**Table 2:**

| time period | t1 | t2 | t3 | t4 |
|---|---|---|---|---|
| first wind turbine | (s1+, s2+) | (s1-, s2+) | (s1+, s2-) | (s1-, s2-) |
| second wind turbine | (s1-, s2-) | (s1+, s2-) | (s1-, s2+) | (s1+, s2+) |

After the period t4 the sequence may be repeated. This scheme may easily be extended to any number of operational parameter comprised in the parameter setting.

In particular, optimal power production of a wind turbine at below rated power will depend on the ability to apply an optimal pitch angle (the pitch angle is the angle between the blade cord line and the rotor blade of rotation) and to track the optimal rotor tip-speed ration (the ratio of rotor shaft speed to effective wind speed) at below rated rotational speed.

It should be appreciated that in the above described scheme all combinations of parameter settings deviating from a start parameter setting in a positive manner and negative manner by a particular deviation size are explored during the method in order to find the optimal parameter setting which optimizes the target function.

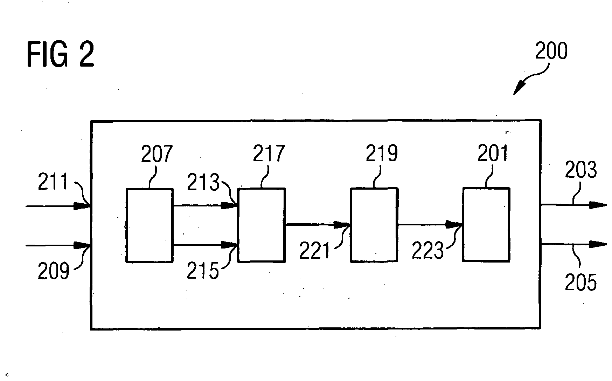

**Fig. 2** illustrates an arrangement 200 for optimizing a parameter setting of a wind turbine according to an embodiment of the present invention.

The arrangement 200 comprises an output section 201 for providing a first operating signal 203 causing a first wind turbine to operate according to a first parameter setting s+ and for simultaneously providing a second operating signal 205 causing a second wind turbine to operate according to a second parameter setting s-.

Further, the arrangement 200 comprises an evaluator 207 which, based on input signals 209, 211 indicating power output and load of the first wind turbine and the second wind turbine, to evaluate an operation of the first wind turbine by determining a first result 213 and to evaluate the operation of the second wind turbine by determining a second result 215 which results are supplied to a comparator 217 which is adapted to compare the first result 213 and the second result 215.

A processor further comprised in the arrangement 200, i.e. the processor 219 is adapted to adapt the parameter setting based on the comparison result 221 output by the comparator 217. The processor provides the corresponding optimized parameter settings to the output section 201 via a signal 223.

The method according to an embodiment of the present invention and the arrangement accomplishes an optimization of a target function by setting a predetermined pitch angle and a generator (or converter) reference power or torque, to balance the rotor aerodynamic torque. Below the rated power the pitch angle may typically be fixed in the variable-speed region and the power (or torque) reference may be set as a function of the rotational speed (or wind speed). Below rated power in the constant-speed region (of the rotor) the pitch angle may change as a function of the power, torque or wind speed, while the power (or torque) reference may be adjusted in order to maintain the desired speed. At a rated power production, the rotor blades may be pitched out to maintain a constant rotational speed and hence a constant power output. The method and arrangement according to an embodiment of the present invention in particular overcomes some of the disadvantages of the reference methods. Further, it allows optimizing the wind turbine controller setting of a wind farm in an efficient (fast) way without knowing the wind speed or binning the data. The method ignores wind fluctuations or handles them such that they do not negatively influence the accuracy of the results.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Method (100) for optimization a parameter setting (s), the method comprising:
operating (111) a first wind turbine according to a first parameter setting (s+), in particular during a first time period (t1);
simultaneously operating (111) a second wind turbine according to a second parameter setting (s-) different from the first parameter setting;
evaluating (113) an operation of the first wind turbine by determining a first result (T+) of a target function;
evaluating (113) an operation of the second wind turbine by determining a second result (T-) of the target function;
comparing (123) the first result (T+) and the second result (T-); and
adapting (125, 127) the parameter setting (s) based on the comparison, such as to optimize the target function,
wherein the operating the first wind turbine according to the first parameter setting and the evaluating is done repeatedly to obtain plural first results;
wherein the simultaneously operating the second wind turbine according to the second parameter setting and the evaluating is done repeatedly, to obtain plural second results,
wherein a cumulated first result (cumT+) is obtained by combining the plural first results (T+),
wherein a cumulated second result (cumT-) is obtained by combining the plural second results (T-),
wherein adapting the parameter setting is based on a comparison of the cumulated first result (cumT+) and the cumulated second result (cumT-),
the method further comprising:
operating the first wind turbine according to the second parameter setting during a second time period (t2) after the first time period (t1);
simultaneously operating the second wind turbine according to the first parameter setting,
wherein adapting the parameter setting is further based on
evaluating an operation of the first wind turbine operated according to the second parameter setting and
evaluating an operation of the second wind turbine operated according to the first parameter setting.

2. Method according to claim 1, wherein an operation of the first wind turbine or the second wind turbine is filtered (115) out from the evaluation, if
the operation is above a rated wind speed and/or
there is a wake situation between wind turbines.

3. Method according to the preceding claim, further comprising:
repeating operating the first wind turbine and the second wind turbine for the particular parameter setting, until the cumulated first result differs by more than a threshold from the cumulated second result or until a number of time periods exceed a number limit.

4. Method according to one of the preceding claims, further comprising:
operating the first wind turbine according to at least one other first parameter setting;
simultaneously operating the second wind turbine according to at least one other second parameter setting, wherein adapting the parameter setting is further based on
evaluating an operation of the first wind turbine operated according to the at least one other first parameter set and
evaluating an operation of the second wind turbine operated according to the at least one other second parameter set.

5. Method according to the preceding claim, further comprising:
operating the first wind turbine according to the at least one other second parameter setting;
simultaneously operating the second wind turbine according to the at least one other first parameter setting, wherein adapting the parameter setting is further based on
evaluating an operation of the first wind turbine operated according to the at least one other second parameter set and
evaluating an operation of the second wind turbine operated according to the at least one other first parameter set.

6. Method according to one of the preceding claims, wherein the parameters setting (s) includes settings for a plurality of operational parameters (s1, s2, s3, ..., sN) of the respective wind turbine,
wherein in particular the first parameter setting differs in at least one setting of at least one of the plurality of operational parameters from the second parameter setting,
wherein in particular the first parameter setting differs in all settings of all of the plurality of operational parameters from the second parameter setting.

7. Method according to the preceding claim, wherein the first parameter setting, the second parameter setting, the at least one other first parameter setting and the at least one other second parameter setting comprise all combinations of settings for the plurality of operational parameters (s1, s2, s3, ..., sN) that deviate by a respective parameter deviation (Δ) in a positive and negative manner from a starting parameter setting (s),
wherein in particular the first wind turbine is successively operated in 2^{N} different parameter settings, if N is the number of operational parameters of the plurality of operational parameters (s1, s2, s3, ..., sN).

8. Method according to the preceding claim, wherein the parameter deviation (Δ) depends on a type of the operational parameter (s1, s2, s3, ..., sN).

9. Method according to one of the preceding claims, wherein the method further comprises:
operating, in a successive manner, both the first wind turbine and the second wind turbine according to a same parameter setting comprised in the first parameter setting, the second parameter setting, the at least one other first parameter setting and the at least one other second parameter setting,
wherein adapting the parameter setting is further based on
evaluating an operation of the first wind turbine and the second wind turbine operated according to the same parameter setting.

10. Method according to one of the preceding claims, performed without using any reference result obtained by operating a reference turbine according to a reference parameter setting,
wherein, after adapting the parameter setting based on the comparison, the method is performed in a recursive manner starting with the adapted parameter setting.

11. Method according to one of the preceding claims, wherein the first wind turbine and the second wind turbine are selected such as to be subjected to essentially the same external conditions, in particular wind conditions.

12. Method according to one of the preceding claims, wherein the parameter setting includes a setting for:
a blade pitch angle characteristic of a rotor blade of the respective wind turbine, and/or
a characteristics of a rotational speed of the rotor or generator versus output power of the generator or torque of the generator of the respective wind turbine, and/or
an offset of wind direction sensor of the respective wind turbine,
wherein in particular the target function comprises a power output of the respective wind turbine and/or a load experienced by the respective wind turbine during operation.

13. Arrangement (200) for optimization a parameter setting, the arrangement comprising:
an output section (201)
for providing a first operating signal (203) causing a first wind turbine to operate according to a first parameter setting (s+), in particular during a first time period (t1) and
for simultaneously providing a second operating signal (205) causing a second wind turbine to operate according to a second parameter setting (s-) different from the first parameter setting;
an evaluator (207) adapted
to evaluate an operation of the first wind turbine by determining a first result (213, T+) of a target function;
to evaluate an operation of the second wind turbine by determining a second result (215, T-) of the target function;
a comparator (217) adapted to compare the first result (213) and the second result (215); and
a processor (219) adapted to adapt the parameter setting based on the comparison, such as to optimize the target function, in particular without using any reference results,
wherein the arrangement is adapted such that:
the operating the first wind turbine according to the first parameter setting and the evaluating is done repeatedly to obtain plural first results;
the simultaneously operating the second wind turbine according to the second parameter setting and the evaluating is done repeatedly, to obtain plural second results,
a cumulated first result (cumT+) is obtained by combining the plural first results (T+);
a cumulated second result (cumT-) is obtained by combining the plural second results (T-); and
adapting the parameter setting is based on a comparison of the cumulated first result (cumT+) and the cumulated second result (cumT-),
the arrangement is further adapted to:
operate the first wind turbine according to the second parameter setting during a second time period (t2) after the first time period (t1);
simultaneously operate the second wind turbine according to the first parameter setting,
wherein adapting the parameter setting is further based on
evaluate an operation of the first wind turbine operated according to the second parameter setting and
evaluate an operation of the second wind turbine operated according to the first parameter setting.

## Patentansprüche

1. Verfahren (100) zum Optimieren einer Parametereinstellung (s), das Folgendes umfasst:
Betreiben (111) einer ersten Windenergieanlage gemäß einer ersten Parametereinstellung (s+), insbesondere während eines ersten Zeitraums (t1),
gleichzeitiges Betreiben (111) einer zweiten Windenergieanlage gemäß einer zweiten Parametereinstellung (s-), die sich von der ersten Parametereinstellung unterscheidet, Auswerten (113) eines Betriebs der ersten Windenergieanlage durch Ermitteln eines ersten Ergebnisses (T+) einer Zielfunktion,
Auswerten (113) eines Betriebs der zweiten Windenergieanlage durch Ermitteln eines zweiten Ergebnisses (T-) der Zielfunktion,
Vergleichen (123) des ersten Ergebnisses (T+) mit dem zweiten Ergebnis (T-) und
Anpassen (125, 127) der Parametereinstellung (s) auf der Grundlage des Vergleichs zwecks Optimieren der Zielfunktion,
wobei das Betreiben der ersten Windenergieanlage gemäß der ersten Parametereinstellung und das Auswerten wiederholt ausgeführt werden, um mehrere erste Ergebnisse zu gewinnen,
wobei das gleichzeitige Betreiben der zweiten Windenergieanlage gemäß der zweiten Parametereinstellung und das Auswerten wiederholt ausgeführt werden, um mehrere zweite Ergebnisse zu gewinnen,
wobei durch Kombinieren der mehreren ersten Ergebnisse (T+) ein erstes kumuliertes Ergebnis (cumT+) gewonnen wird, wobei durch Kombinieren der mehreren zweiten Ergebnisse (T-) ein zweites kumuliertes Ergebnis (cumT-) gewonnen wird,
wobei das Anpassen der Parametereinstellung auf einem Vergleich des ersten kumulierten Ergebnisses (cumT+) mit dem zweiten kumulierten Ergebnis (cumT-) beruht,
wobei das Verfahren ferner Folgendes umfasst:
Betreiben der ersten Windenergieanlage gemäß der zweiten Parametereinstellung während eines zweiten Zeitraums (t2) nach dem ersten Zeitraum (t1),
gleichzeitiges Betreiben der zweiten Windenergieanlage gemäß der ersten Parametereinstellung, wobei das Anpassen der Parametereinstellung ferner auf Folgendem beruht:Auswerten eines Betriebs der ersten Windenergieanlage, die gemäß der zweiten Parametereinstellung betrieben wird, und
Auswerten eines Betriebs der zweiten Windenergieanlage, die gemäß der ersten Parametereinstellung betrieben wird.

2. Verfahren nach Anspruch 1, bei dem ein Betreiben der ersten oder der zweiten Windenergieanlage aus der Auswertung herausgefiltert (115) wird, wenn
der Betrieb oberhalb einer Nennwindgeschwindigkeit erfolgt und/ oder
es zwischen Windenergieanlagen zu Abschattung kommt.

3. Verfahren nach dem vorhergehenden Anspruch, das ferner Folgendes umfasst:
Wiederholen des Betreibens der ersten und der zweiten Windenergieanlage für die bestimmte Parametereinstellung, bis sich das erste kumulierte Ergebnis um mehr als einen Schwellwert von dem zweiten kumulierten Ergebnis unterscheidet oder eine Anzahl Zeiträume einen Grenzwert überschreitet.

4. Verfahren nach einem der vorhergehenden Ansprüche, das ferner Folgendes umfasst:
Betreiben der ersten Windenergieanlage gemäß mindestens einer anderen ersten Parametereinstellung,
gleichzeitiges Betreiben der zweiten Windenergieanlage gemäß mindestens einer anderen zweiten Parametereinstellung, wobei das Anpassen der
Parametereinstellung ferner auf Folgendem beruht:Auswerten eines Betriebs der ersten Windenergieanlage, die gemäß dem mindestens einen anderen ersten Parametersatz betrieben wird, und
Auswerten eines Betriebs der zweiten Windenergieanlage, die gemäß dem mindestens einen anderen zweiten Parametersatz betrieben wird.

5. Verfahren nach dem vorhergehenden Anspruch, das ferner Folgendes umfasst:
Betreiben der ersten Windenergieanlage gemäß der mindestens einen anderen zweiten Parametereinstellung,
gleichzeitiges Betreiben der zweiten Windenergieanlage gemäß der mindestens einen anderen ersten Parametereinstellung, wobei das Anpassen der Parametereinstellung ferner auf Folgendem beruht:Auswerten eines Betriebs der ersten Windenergieanlage, die gemäß dem mindestens einen anderen zweiten Parametersatz betrieben wird, und
Auswerten eines Betriebs der zweiten Windenergieanlage, die gemäß dem mindestens einen anderen ersten Parametersatz betrieben wird.

6. Verfahren nach einem der vorhergehenden Ansprüche, bei dem die Parametereinstellung (s) Einstellungen für mehrere Betriebsparameter (s1, s2, s3, ..., sN) der entsprechenden Windenergieanlage enthält,
wobei sich insbesondere die erste Parametereinstellung bei mindestens einer Einstellung mindestens eines der mehreren Betriebsparameter von der zweiten Parametereinstellung unterscheidet,
wobei sich insbesondere die erste Parametereinstellung bei allen Einstellungen aller der mehreren Betriebsparameter von der zweiten Parametereinstellung unterscheidet.

7. Verfahren nach dem vorhergehenden Anspruch, bei dem die erste, die zweite, die mindestens eine andere erste und die mindestens eine andere zweite Parametereinstellung alle Kombinationen von Einstellungen für die mehreren Betriebsparameter (s1, s2, s3, ..., sN) umfasst, die auf positive und negative Weise um eine entsprechende Parameterabweichung (Δ) von einer Ausgangsparametereinstellung (s) abweichen,
wobei insbesondere die erste Windenergieanlage nacheinander mit 2^{N} verschiedenen Parametereinstellungen betrieben wird, wenn N die Anzahl Betriebsparameter der mehreren Betriebsparameter (s1, s2, s3, ..., sN) ist.

8. Verfahren nach dem vorhergehenden Anspruch, bei dem die Parameterabweichung (Δ) von einer Art des Betriebsparameters (s1, s2, s3, ..., sN) abhängig ist.

9. Verfahren nach einem der vorhergehenden Ansprüche, das ferner Folgendes umfasst:
nacheinander erfolgendes Betreiben sowohl der ersten als auch der zweiten Windenergieanlage gemäß einer gleichen Parametereinstellung aus der ersten, der zweiten, der mindestens einen anderen ersten und der mindestens einen anderen zweiten Parametereinstellung, wobei das Anpassen der Parametereinstellung ferner auf Folgendem beruht:Auswerten eines Betriebs der ersten und der zweiten Windenergieanlage, die gemäß der gleichen Parametereinstellung betrieben werden.

10. Verfahren nach einem der vorhergehenden Ansprüche, das ohne Verwendung eines Referenzergebnisses ausgeführt wird, welches durch Betreiben einer Referenzanlage gemäß einer Referenzparametereinstellung gewonnen wird,
wobei das Verfahren nach dem Anpassen der Parametereinstellung auf der Grundlage des Vergleichs bei der angepassten Parametereinstellung beginnend auf rekursive Weise ausgeführt wird.

11. Verfahren nach einem der vorhergehenden Ansprüche, bei dem die erste und die zweite Windenergieanlage so ausgewählt werden, dass sie im Wesentlichen den gleichen externen Bedingungen, insbesondere Windbedingungen, ausgesetzt sind.

12. Verfahren nach einem der vorhergehenden Ansprüche, bei dem zur Parametereinstellung folgende Einstellungen gehören:
eine Blattanstellwinkeleigenschaft eines Rotorblatts der entsprechenden Windenergieanlage und/oder
eine Eigenschaft einer Drehzahl des Rotors oder Generators im Vergleich zur Ausgangsleistung des Generators oder des Drehmoments des Generators der entsprechenden Windenergieanlage und/oder
eine Abweichung des Windrichtungssensors der entsprechenden Windenergieanlage,
wobei insbesondere die Zielfunktion eine Ausgangsleistung der entsprechenden Windenergieanlage und/oder eine Last umfasst, der die entsprechende Windenergieanlage während des Betriebs ausgesetzt ist.

13. Anordnung (200) zum Optimieren einer Parametereinstellung, die Folgendes umfasst:
einen Ausgangsabschnitt (201)
zum Bereitstellen eines ersten Betriebssignals (203), das eine erste Windenergieanlage dazu veranlasst, insbesondere während eines ersten Zeitraums (t1) gemäß einer ersten Parametereinstellung (s+) zu arbeiten,
zum gleichzeitigen Bereitstellen eines zweiten Betriebssignals (205), das eine zweite Windenergieanlage dazu veranlasst, gemäß einer zweiten Parametereinstellung (s-) zu arbeiten, die sich von der ersten Parametereinstellung unterscheidet,
eine Auswerteeinrichtung (207), die so ausgelegt ist,
dass sie einen Betrieb der ersten Windenergieanlage durch Ermitteln eines ersten Ergebnisses (213, T+) einer Zielfunktion auswertet,
dass sie einen Betrieb der zweiten Windenergieanlage durch Ermitteln eines zweiten Ergebnisses (215, T-) der Zielfunktion auswertet,
eine Vergleichseinrichtung (217), die so ausgelegt ist, dass sie das erste Ergebnis (213) mit dem zweiten Ergebnis (215) vergleicht, und
einen Prozessor (219), der so ausgelegt ist, dass er die Parametereinstellung auf der Grundlage des Vergleichs anpasst, um beispielsweise, insbesondere ohne Verwendung von Referenzergebnissen, die Zielfunktion zu optimieren,
wobei die Anordnung so ausgelegt ist, dass:
das Betreiben der ersten Windenergieanlage gemäß der ersten Parametereinstellung und das Auswerten wiederholt ausgeführt werden, um mehrere erste Ergebnisse zu gewinnen,
das gleichzeitige Betreiben der zweiten Windenergieanlage gemäß der zweiten Parametereinstellung und das Auswerten wiederholt ausgeführt werden, um mehrere zweite Ergebnisse zu gewinnen,
durch Kombinieren der mehreren ersten Ergebnisse (T+) ein erstes kumuliertes Ergebnis (cumT+) gewonnen wird,
durch Kombinieren der mehreren zweiten Ergebnisse (T-) ein zweites kumuliertes Ergebnis (cumT-) gewonnen wird und
das Anpassen der Parametereinstellung auf einem Vergleich des ersten kumulierten Ergebnisses (cumT+) mit dem zweiten kumulierten Ergebnis (cumT-) beruht,
wobei die Anordnung ferner so ausgelegt ist, dass Betreiben der ersten Windenergieanlage gemäß der zweiten Parametereinstellung während eines zweiten Zeitraums (t2) nach dem ersten Zeitraum (t1),
gleichzeitiges Betreiben der zweiten Windenergieanlage gemäß der ersten Parametereinstellung, wobei das Anpassen der Parametereinstellung ferner auf Folgendem beruht:Auswerten eines Betriebs der ersten Windenergieanlage, die gemäß der zweiten Parametereinstellung betrieben wird, und
Auswerten eines Betriebs der zweiten Windenergieanlage, die gemäß der ersten Parametereinstellung betrieben wird.

## Revendications

1. Procédé (100) d'optimisation d'un réglage de paramètres (s), le procédé comprenant :
- faire fonctionner (111) une première turbine éolienne selon un premier réglage de paramètres (s+), en particulier pendant une première période de temps (t1) ;
- faire fonctionner simultanément (111) une seconde turbine éolienne selon un second réglage de paramètres (s-) différent du premier réglage de paramètres ;
- évaluer (113) un fonctionnement de la première turbine éolienne en déterminant un premier résultat (T+) d'une fonction cible ;
- évaluer (113) le fonctionnement de la seconde turbine éolienne en déterminant un second résultat (T-) de la fonction cible ;
- comparer (123) le premier résultat (T+) et le second résultat (T-) ; et
- adapter (125, 127) le réglage de paramètres (s) sur la base de la comparaison de façon à optimiser la fonction cible,
dans lequel le fonctionnement de la première turbine éolienne selon le premier réglage de paramètres et l'évaluation sont effectués de façon répétée pour obtenir une pluralité de premiers résultats ;
dans lequel le fonctionnement simultané de la seconde turbine éolienne selon le second réglage de paramètres et l'évaluation sont effectués de façon répétée pour obtenir une pluralité de seconds résultats,
dans lequel un premier résultat cumulé (cumT+) est obtenu en combinant la pluralité de premiers résultats (T+),
dans lequel un second résultat cumulé (cumT-) est obtenu en combinant la pluralité de seconds résultats (T-),
dans lequel l'adaptation du réglage de paramètres est basée sur une comparaison du premier résultat cumulé (cumT+) et du second résultat cumulé (cumT-),
le procédé comprenant en outre :
- faire fonctionner la première turbine éolienne selon le second réglage de paramètres pendant une seconde période de temps (t2) après la première période de temps (t1) ;
- faire fonctionner simultanément la seconde turbine éolienne selon le premier réglage de paramètres,
dans lequel l'adaptation du réglage de paramètres est en outre basée sur
l'évaluation d'un fonctionnement de la première turbine éolienne fonctionnant selon le second réglage de paramètres et
l'évaluation d'un fonctionnement de la seconde turbine éolienne fonctionnant selon le premier réglage de paramètres.

2. Procédé selon la revendication 1, dans lequel un fonctionnement de la première turbine éolienne ou de la seconde turbine éolienne est filtré (115) à partir de l'évaluation, si
le fonctionnement est au-dessus d'une vitesse nominale du vent et/ou
il y a une situation de sillage entre les turbines éoliennes.

3. Procédé selon la revendication précédente, comprenant en outre :
- répéter le fonctionnement de la première turbine éolienne et de la seconde turbine éolienne pour le réglage de paramètres particulier jusqu'à ce que le premier résultat cumulé diffère de plus d'un seuil du second résultat cumulé ou jusqu'à ce qu'un nombre de périodes de temps dépasse une limite de nombre.

4. Procédé selon l'une des revendications précédentes, comprenant en outre :
- faire fonctionner la première turbine éolienne selon au moins un autre premier réglage de paramètres ;
- faire fonctionner simultanément la seconde turbine éolienne selon au moins un autre second réglage de paramètres,
dans lequel l'adaptation du réglage de paramètres est en outre basée sur
l'évaluation d'un fonctionnement de la première turbine éolienne fonctionnant selon ledit au moins un autre premier réglage de paramètres et
l'évaluation d'un fonctionnement de la seconde turbine éolienne fonctionnant selon ledit au moins un autre second réglage de paramètres.

5. Procédé selon la revendication précédente, comprenant en outre :
- faire fonctionner la première turbine éolienne selon ledit au moins un autre second réglage de paramètres ;
- faire fonctionner simultanément la seconde turbine éolienne selon ledit au moins un autre premier réglage de paramètres,
dans lequel l'adaptation du réglage de paramètres est en outre basée sur
l'évaluation d'un fonctionnement de la première turbine éolienne fonctionnant selon ledit au moins un autre second réglage de paramètres et
l'évaluation d'un fonctionnement de la seconde turbine éolienne fonctionnant selon ledit au moins un autre premier réglage de paramètres.

6. Procédé selon l'une des revendications précédentes, dans lequel le réglage de paramètres (s) comprend des réglages pour une pluralité de paramètres de fonctionnement (s1, s2, s3, ..., sN) de la turbine éolienne respective,
dans lequel en particulier le premier réglage de paramètres diffère dans au moins un réglage d'au moins l'un de la pluralité de paramètres de fonctionnement du second réglage de paramètres,
dans lequel en particulier le premier réglage de paramètres diffère dans tous les réglages de l'ensemble de la pluralité de paramètres de fonctionnement du second réglage de paramètres.

7. Procédé selon la revendication précédente, dans lequel le premier réglage de paramètres, le second réglage de paramètres, ledit au moins un autre premier réglage de paramètres et ledit au moins un autre second réglage de paramètres comprennent toutes les combinaisons de réglages pour la pluralité de paramètres de fonctionnement (s1, s2, S3, ..., sN) qui s'écartent d'un écart de paramètre respectif (Δ) d'une manière positive et négative d'un réglage de paramètres de départ (s),
dans lequel en particulier la première turbine éolienne fonctionne successivement dans 2^{N} différents réglages de paramètres, si N est le nombre de paramètres de fonctionnement de la pluralité de paramètres de fonctionnement (s1, s2, s3, ..., sN).

8. Procédé selon la revendication précédente, dans lequel l'écart de paramètre (Δ) dépend d'un type du paramètre de fonctionnement (s1, s2, s3, ..., sN).

9. Procédé selon l'une des revendications précédentes, dans lequel le procédé comprend en outre :
- faire fonctionner, d'une manière successive, à la fois la première turbine éolienne et la seconde turbine éolienne selon un même réglage de paramètres compris dans le premier réglage de paramètres, le second réglage de paramètres, ledit au moins un autre premier réglage de paramètres et ledit au moins un autre second réglage de paramètres,
dans lequel l'adaptation du réglage de paramètres est en outre basée sur
l'évaluation d'un fonctionnement de la première turbine éolienne et de la seconde turbine éolienne fonctionnant selon le même réglage de paramètres.

10. Procédé selon l'une des revendications précédentes, réalisé sans utiliser aucun résultat de référence obtenu en faisant fonctionner une turbine de référence selon un réglage de paramètres de référence,
dans lequel, après l'adaptation du réglage de paramètres sur la base de la comparaison, le procédé est exécuté d'une manière récursive en commençant par le réglage de paramètres adapté.

11. Procédé selon l'une des revendications précédentes, dans lequel la première turbine éolienne et la seconde turbine éolienne sont choisies de manière à être soumises sensiblement aux mêmes conditions extérieures, en particulier les conditions de vent.

12. Procédé selon l'une des revendications précédentes, dans lequel le réglage de paramètres comprend un paramètre pour :
- une caractéristique d'angle d'attaque de pale d'une pale de rotor de la turbine éolienne respective, et/ou
- une caractéristique d'une vitesse de rotation du rotor ou de la génératrice par rapport à la puissance de sortie de la génératrice ou au couple de la génératrice de la turbine éolienne respective, et/ou
- un décalage du capteur de direction du vent de la turbine éolienne respective,
dans lequel en particulier la fonction cible comprend une sortie de puissance de la turbine éolienne respective et/ou une charge subie par la turbine éolienne respective lors de son fonctionnement.

13. Agencement (200) pour l'optimisation d'un réglage de paramètres, l'agencement comprenant :
- une section de sortie (201)
pour fournir un premier signal de commande (203) amenant une première turbine éolienne à fonctionner selon un premier réglage de paramètres (s+), en particulier pendant une première période de temps (t1) et
pour fournir simultanément un second signal de commande (205) amenant une seconde turbine éolienne à fonctionner selon un second réglage de paramètres (s-) différent du premier réglage de paramètres ;
- un évaluateur (207) conçu
pour évaluer un fonctionnement de la première turbine éolienne en déterminant un premier résultat (213, T+) d'une fonction cible ;
pour évaluer un fonctionnement de la seconde turbine éolienne en déterminant un second résultat (215, T-) de la fonction cible ;
- un comparateur (217) conçu pour comparer le premier résultat (213) et le second résultat (215) ; et
- un processeur (219) conçu pour adapter le réglage de paramètres sur la base de la comparaison de façon à optimiser la fonction cible, en particulier sans utiliser aucun résultat de référence,
dans lequel l'agencement est conçu de telle sorte que :
le fonctionnement de la première turbine éolienne selon le premier réglage de paramètres et l'évaluation sont effectués de façon répétée pour obtenir une pluralité de premiers résultats ;
le fonctionnement simultané de la seconde turbine éolienne selon le second réglage de paramètres et l'évaluation sont effectués de façon répétée pour obtenir une pluralité de seconds résultats,
un premier résultat cumulé (cumT+) est obtenu en combinant la pluralité de premiers résultats (T+),
un second résultat cumulé (cumT-) est obtenu en combinant la pluralité de seconds résultats (T-) ; et
l'adaptation du réglage de paramètres est basée sur une comparaison du premier résultat cumulé (cumT+) et du second résultat cumulé (cumT-),
l'agencement est en outre conçu de manière à :
- faire fonctionner la première turbine éolienne selon le second réglage de paramètres pendant une seconde période de temps (t2) après la première période de temps (t1) ;
- faire fonctionner simultanément la seconde turbine éolienne selon le premier réglage de paramètres,
dans lequel l'adaptation du réglage de paramètres est en outre basée sur
l'évaluation d'un fonctionnement de la première turbine éolienne fonctionnant selon le second réglage de paramètres et
l'évaluation d'un fonctionnement de la seconde turbine éolienne fonctionnant selon le premier réglage de paramètres.
